# EUROPEAN PATENT APPLICATION

(11) **EP 3 148 243 A1**
(43) Date of publication of application: **29.03.2017**
(21) Application number: 15306478.7
(22) Date of filing: 23.09.2015
(51) Int. Cl.: H04W 24/02

(54) **RESOURCE OPTIMIZATION IN A MOBILE COMMUNICATION NETWORK**

(71) Applicant: ALCATEL LUCENT, 92100 Boulogne-Billancourt (FR)
(72) Inventor: Prakash, D., 560045 Bangalore (IN); Madhusudana, C. K., 560045 Bangalore (IN)
(74) Representative: El Manouni, Josiane

(57) **Abstract**

In an embodiment, there is provided a method for resource optimization in a mobile communication network, based on predictable Communication Pattern CP information of a User Equipment UE, a method wherein:
- said CP information includes information referred to as scheduled location information, providing a schedule of expected UE locations.

## Description

The present invention generally relates to mobile communication networks and systems.

Descriptions of mobile networks and systems can be found in the literature, such as in particular in Technical Specifications published by standardization bodies such as for example 3GPP (3^{rd} Generation Partnership Project).

An example of 3GPP mobile system is EPS (Evolved Packet System), specified in particular in 3GPP TS 23.401. In a mobile system such as EPS, a mobile terminal (or User Equipment UE) can communicate with packet data networks and applications via an EPS network providing communication services. An EPS network comprises a Core Network (CN) called EPC (Evolved Packet Core) that can be accessed by a Radio Access Network RAN such as E-UTRAN (or UTRAN or GERAN).

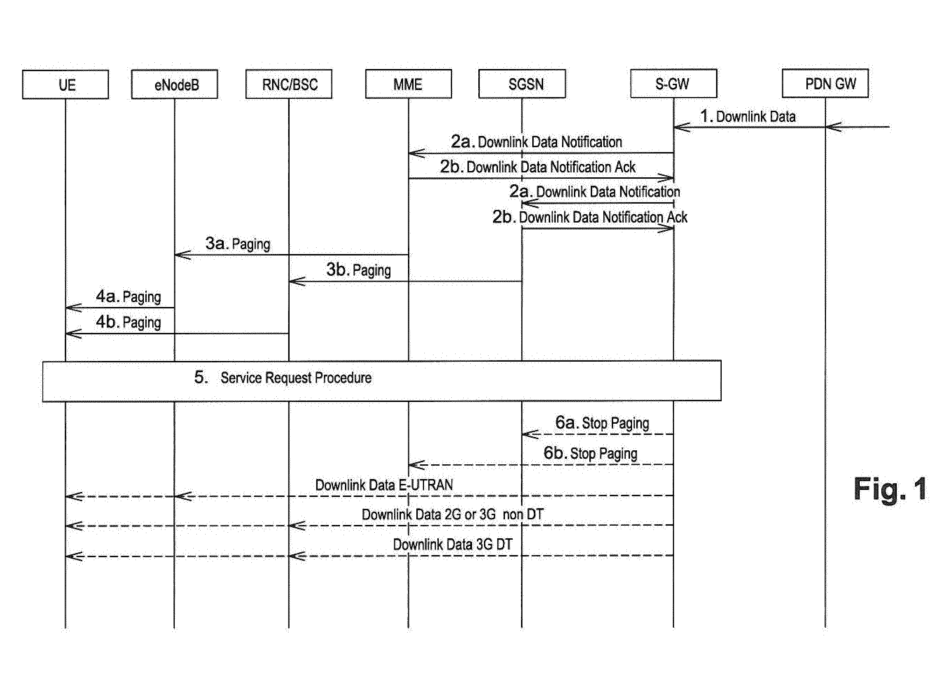

In a system such as EPS, a network triggered service request procedure (recalled in figure 1 taken from 3GPP TS 23.401) is performed when a downlink packet is received for an UE in idle mode, including a paging procedure. Such paging procedure includes sending Paging messages by the mobility management entity serving the UE, such as Mobility Management Entity MME for E-UTRAN access (or Serving GPRS Support Node SGSN for UTRAN or GERAN access), to each RAN entity belonging to an area in which the UE is registered, such as to each eNB belonging to the Tracking Areas (TAs) in which the UE is registered for E-UTRAN access (or to each Radio Network Controller RNC or Base Station Controller BSC belonging to the Routing Area in which the UE is registered for UTRAN or GERAN access), and paging the UE by these RAN entities, in cells belonging to the area in which the UE is registered.

An important issue in such networks and systems is network resource optimization, in particular RAN network resource optimization.

E-UTRAN network resource optimization based on predictable Communication Patterns (CP) of a User Equipment UE has recently been introduced, in particular in 3GPP TS 23.682 specifying architectural enhancements to facilitate communications with packet data networks and applications (e.g. Machine Type Communication MTC applications). Some CP parameters have been introduced, which, as also specified in 3GPP TS 23.401, may be used by the MME for CN assisted eNB parameters tuning.

However, as recognized by the inventors and as will be described with more detail later, optimization of network resources consumed by some procedures (such as, in particular, the above-recalled paging procedure) still needs to be enhanced. Such enhancements may need to introduce new, more useful, CP parameter(s).

Embodiments of the present invention in particular address such needs. Embodiments of the present invention are not limited to EPS, and may also apply to systems other than EPS.

These and other objects are achieved, in one aspect, by a method for resource optimization in a mobile communication network, based on predictable Communication Pattern CP information of a User Equipment UE, a method wherein:
- said CP information includes information referred to as scheduled location information, providing a schedule of expected UE locations.

These and other objects are achieved, in another aspect, by a method for resource optimization in a mobile communication network, based on predictable Communication Pattern CP information of User Equipment UE, a method wherein:
- said CP information includes information characterizing the communication of the UE, and information referred to as reliability indication information, providing an indication of the reliability of said information characterizing the communication of the UE.

These and other objects are achieved, in other aspects, by network entities configured for performing related steps of such method(s), said network entities including (though not limited to): mobility management entity (such as Mobility Management Entity MME or Serving GPRS Support Node SGSN), Home Subscriber Server HSS, Application Server, RAN entity (such as eNodeB, or Radio Network Controller RNC, or Base Station Controller BSC).

Some embodiments of apparatus and/or methods in accordance with embodiments of the present invention are now described, by way of example only, and with reference to the accompanying drawings, in which:
- Figure 1 is intended to recall paging performed during a network triggered service request procedure,
- Figure 2 is intended to recall a signaling sequence for provisioning of CP parameters,
- Figure 3 is intended to illustrate an example of system architecture using embodiments of the invention,
- Figure 4 is intended to illustrate an example of signaling sequence in a system such as illustrated in figure 3, according to embodiments of the invention,
- Figure 5 is intended to illustrate an example of optimized paging procedure, according to embodiments of the invention.

Following description of embodiments of the invention will be made by way of example for EPS. However, as indicated above, embodiments of the invention are not limited to such example.

As recalled above, Communication Patterns (CP) have been introduced, in particular in 3GPP TS 23.682. The set of CP parameters as currently specified, is recalled in the table below, taken from 3GPP TS 23.682 (where this table is called Table 5.10.1-1).

| **CP parameter** | **Description** |
|---|---|
| 1) Periodic communication indicator | Identifies whether the UE communicates periodically or not, e.g. only on demand. [optional] |
| 2) Communication duration time | Duration interval time of periodic communication [optional, may be used together with 1)] |
| | Example: 5 minutes |
| 3) Periodic time | Interval Time of periodic communication [optional, may be used together with 1)] |
| | Example: every hour |
| 4) Scheduled communication time | Time zone and Day of the week when the UE is available for communication [optional] |
| | Example: Time: 13:00-20:00, Day: Monday |
| 5) Stationary indication | Identifies whether the UE is stationary or mobile [optional] |

Embodiments of the invention include introducing new CP parameter(s), based in particular on following ideas.

The introduction of CP Parameters has created a set of information that characterizes the communication of the UE.

Two important additional sets of information that can be extremely useful to the MME are knowledge of where the UE is expected to be (in particular which cells) at various times, and reliability of the information provided in the CP Parameters. These two sets of information, which may be considered separately or in combination, may be provided to the MME in addition to existing CP parameters.

### 1) Schedule of UE Locations

The MME may be capable of generating internally a history of the UE locations at various times, e.g. at various times of the day and during various days of the week. However, as the UE moves, a different MME may take control of the UE and need to develop its own history. Different MME implementations may approach such generation of UE location history in different ways, making the passing of that information from one MME to the next difficult.

An approach suggested according to embodiments of the invention is to provide a CP Parameter that allows an application (that may be owned and operated by the PLMN operator) to provide a schedule of expected UE locations e.g. by day of the week, time of day, etc.

In an embodiment, it is proposed to add a CP Parameter that provides the MME/SGSN with a list of cell IDs (E-UTRAN Cell Global Identifier, ECGI) where the UE is expected to be located, plus the time(s) that the UE is expected to be at a location, in order to improve e.g. paging resource utilization.

Below, such CP parameter is also called "ECGI Schedule list" CP Parameter.

3GPP TS 23.682 provides the ability to install and to update the CP Parameters for a subscription. An additional parameter that may make the existing parameters much more useful is a list of ECGIs where the UE is expected at various times.

In an embodiment, it is proposed to add "ECGI Schedule list" to the CP parameters in Table 5.10.1-1, and provide a description of this additional parameter, including its relationship with the "Scheduled communication time" parameter, for example as described in the table below.

If the "ECGI Schedule list" is not included and the MME has no history of the movements of the device, the MME may e.g. have to page in a larger area, thus wasting paging resources.

An example of set of Communication Pattern (CP) parameters including the "ECGI Schedule list" parameter is given in the table below.

| **CP parameter** | **Description** |
|---|---|
| 1) Periodic communication indicator | Identifies whether the UE communicates periodically or not, e.g. only on demand. [optional] |
| 2) Communication duration time | Duration interval time of periodic communication [optional, may be used together with 1)] |
| | Example: 5 minutes |
| 3) Periodic time | Interval Time of periodic communication [optional, may be used together with 1)] |
| | Example: every hour |
| 4) Scheduled communication time | Time zone and Day of the week when the UE is available for communication [optional] |
| | Example: Time: 13:00-20:00, Day: Monday |
| | See Note 1. |
| 5) Stationary indication | Identifies whether the UE is stationary or mobile [optional] |
| y) ECGI Schedule list | Indicates the sets of ECGIs where the UE is expected at various times. [Optional, may be used together with all other CP parameters.] |
| | When included, the ECGI Schedule list shall contain a set of ECGIs, plus the Day(s) of the Week, Time Period(s) during that(those) day(s), and the Time zone applicable to the Time Period(s). |
| | See Note 1. |
| Note 1: The Scheduled communication time parameter indicates a time period when the UE is expected to be available for communication, which is different than the ECGI Schedule list parameter which indicates the expected location of the UE at various periods. | |

### 2) CP Parameter Reliability

The expected actions of the UE as provided to the MME/SGSN in the CP Parameters information may be more or less reliable, depending on the type of activities the UE is involved in.

For example, an MTC UE that is always in the same location and always communicates 200 bytes at 2 am is very predictable. The reliability of the CP Parameter information for that UE will be extremely high.

As a second example, a person that follows a regular pattern of leaving home at 6:00 am, taking the train to work, walking from the train station to their office, spending the day in their office building, and returning home at 5:00 pm on the train can be characterized as generally predictable. However, that person may choose to take a walk at lunch during the summer time or on days without rain. That person may take an occasional day off, and will take some vacation time perhaps during the summer or for particular holidays. So, the CP Parameter information that might be applied to the smart phone used by that person could be expected to be generally reliable, but less so than that of the MTC UE of the first example, particularly as it relates to location.

The MME/SGSN that knows the reliability of the CP Parameter information can use that to adjust its internal algorithms. For example, if the reliability is very high, the MME/SGSN may choose to page in a single cell only at all times. Or if the reliability is good but not the best, the MME/SGSN may choose to page in a small area to begin with, but may use the reliability information to decide when to expand the paging area.

In an embodiment, it is proposed to add a CP Parameter that provides the reliability of the CP Parameter information being given to the MME/SGSN.

Below, such CP parameter is also called "Data Reliability" CP Parameter.

3GPP TS 23.682 provides the ability to install and to update the CP Parameters for a subscription. An additional parameter that makes the existing parameters much more useful is an indication of the reliability of the information in the CP Parameters. Such indication of reliability may be estimated by the application layer.

In an embodiment, it is proposed to add "Data Reliability" to the CP parameters in Table 5.10.1-1, and provide a description of this additional parameter (for example as described in the table below).

If the "Data Reliability" information is not included, the MME will not be able to judge as well how to apply the CP Parameters information to its internal algorithms to achieve improved results.

An example of set of Communication Pattern (CP) parameters including the "Data Reliability" parameter is given in the table below.

| **CP parameter** | **Description** |
|---|---|
| 1) Periodic communication indicator | Identifies whether the UE communicates periodically or not, e.g. only on demand. [optional] |
| 2) Communication duration time | Duration interval time of periodic communication [optional, may be used together with 1)] |
| | Example: 5 minutes |
| 3) Periodic time | Interval Time of periodic communication [optional, may be used together with 1)] Example: every hour |
| 4) Scheduled communication time | Time zone and Day of the week when the UE is available for communication [optional] |
| | Example: Time: 13:00-20:00, Day: Monday |
| 5) Stationary indication | Identifies whether the UE is stationary or mobile [optional] |
| x) Data reliability | Indicates how reliable the CP parameter set is in a range of 1..n, where n will be chosen during stage 3 work, and the value 1 indicates the highest reliability. [Optional, may be used together with all other CP parameters.] |

Embodiments of the invention include using new CP parameter(s) such as scheduled location information (such as "ECGI Schedule list") and/or reliability indication information (such as "Data Reliability"), for paging optimization, or more generally for network resource optimization.

Embodiments of the invention include providing new CP parameter(s) such as scheduled location information (such as "ECGI Schedule list") and/or reliability indication information (such as "Data Reliability"), to the MME.

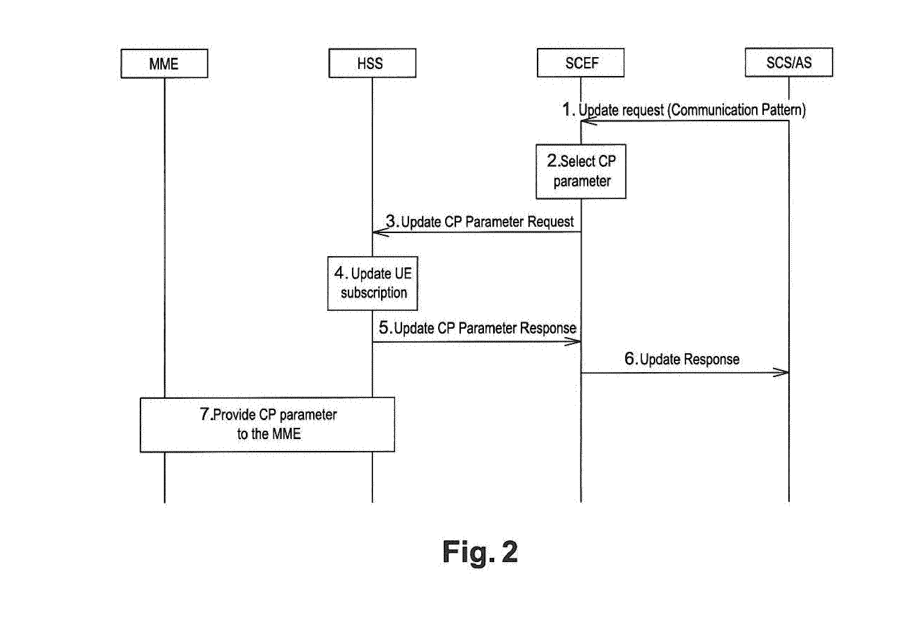

In some embodiments, new CP parameter(s) such as scheduled location information (such as "ECGI Schedule list") and/or reliability indication information (such as "Data Reliability"), may be provided to the MME using a signaling sequence for provisioning of CP parameters as recalled in figure 2 taken from 3GPP TS 23.682.

In such provisioning procedure, upon change of the CP parameters of the UE, the AS provides the corresponding CP parameters to a SCEF (Service Capability Exposure Function). The CP parameters are specific for a UE and are provided by the SCEF to the HSS (Home Subscriber Server) which distributes them to the corresponding MME with relevant subscriber data.

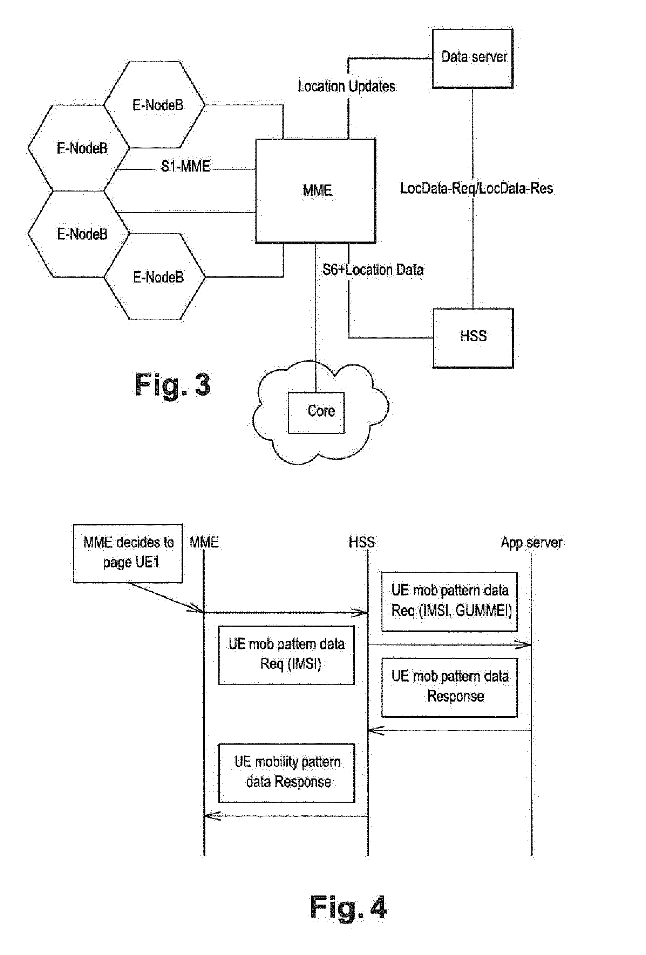

In some embodiments, new CP parameter(s) such as scheduled location information (such as "ECGI Schedule list") and/or reliability indication information (such as "Data Reliability") may be provided to the MME using a signaling sequence as illustrated in figure 4.

An example of system where embodiments of the invention may be used is illustrated in figure 3.

The exemplary system illustrated in figure 3 includes:
- Data server (or Application Server),
- Mobility Management Entity MME,
- eNodeBs connected to the MME (for example, 4 eNodeBs are illustrated),
- Home Subscriber Server HSS.

In some embodiments, two new messages may be introduced over the S6 interface between MME and HSS: "UE mobility pattern data Request" (from MME to HSS), and "UE mobility pattern data Response" (from HSS to MME).

When HSS receives the "UE mobility data pattern Request" from MME, HSS may send the information related to particular UE when ever it's under the coverage of that MME using GUMMEI (Globally unique MME identifier).

Before HSS responds to MME it may consult Data server for recent location information of end user from user profile present in Data server.

After getting location information from Data server, HSS may respond to MME saying e.g. that end user is present in a particular E-NodeB, so paging can be sent to that particular E-NodeB only. So this will save the paging broadcast as well as save the unnecessary effort done by all E-NodeBs to identify end user.

An example of signaling sequence includes some or all of following steps illustrated in figure 4:
- MME decides to page UE,
- MME sends to HSS a request called "UE Mobility Pattern Data Request", containing IMSI as identifier identifying the UE,
- HSS sends to Application Server a request called "UE Mobility Pattern Data Request", containing IMSI as identifier identifying the UE and GUMMEI as identifier identifying the MME,
- Application servers sends to HSS a response called "UE Mobility Pattern Data Response",
- HSS sends to MME a response called "UE Mobility Pattern Data Response".

"UE Mobility Pattern Data Request" sent by MME to HSS may contain one or more of following information enabling communication over S6 interface using protocol defined for said communication over S6 interface:
- Session-Id (specified by MME)
- Auth-Session-State
- Origin- Host (specified by MME)
- Origin-Realm (specified by MME)
- Destination-Host (HSS host)
- Destination-Realm (HSS Realm)
- Terminal Information (IMSI + Software Information)
- RAT type
The "UE Mobility Pattern Data Request" sent by HSS to Application Server may contain same type of information.

"UE Mobility Pattern Data Response" sent by HSS to MME may contain one or more of following information enabling communication over S6 interface using protocol defined for said communication over S6 interface):
- Session-Id (specified by MME)
- Auth-Session-State
- Origin- Host (specified by MME)
- Origin-Realm (specified by MME)
- Result code (RAT type)
- TAI (MCC+MNC+TAC)
- Terminal Information (IMSI + Software Information)
- Result code (RAT type)

The "UE Mobility Pattern Data Response" sent by Application Server to HSS may contain same type of information.

"UE Mobility Pattern Data Response", sent by Application Server to HSS, or by HSS to MME, may further contain scheduled location information.

In an embodiment, scheduled location information includes above-described "ECGI Schedule List" CP parameter.

Based on such list, a paging message may be sent by the MME only to the eNB supporting the cell where the UE is expected to be located at the considered time. For further optimization, the ECGI of this cell may be sent by the MME to the eNB, so that the eNB can page the UE only in this cell.

In an embodiment, the scheduled location information may include a list of eNBs (identified by their Global eNBID), and associated times where the UE is expected to be served by these eNBs.

Based on such list, a paging message may be sent by the MME only to the eNB D expected to serve the UE at the considered time.

"UE Mobility Pattern Data Response", sent by Application Server to HSS, and by HSS to MME, may also contain reliability indication information (or "Data Reliability").

In an embodiment, reliability indication information may be expressed in the form of a Class (such as A, B, C, D, E).

This may be useful e.g. for distinguishing following cases:
Case1:
   Lets assume a new UE1 has been added to the network very recently.
   Data collected is for short duration may not be sufficient for the MME to do the paging based on info provided by the data server.
   To indicate this Data server will fill Data class as ("Data-reliability-info") as E.
Case2:
   Lets assume a new UE2 is in the network for a long time (e.g. many years).
   Data collected for long duration is very reliable.
   To indicate this Data server will fill Data class as ("Data-reliability-info") as A.
   Based on the Data class ("Data-reliability-info") MME can decide which approach (proposed idea or Default paging method) to be used for paging.

In an embodiment, reliability indication information may be expressed in the form of a value (1, ...n) instead of a class (A, B, C, D, E)

Embodiments of the invention include determining new CP parameter(s) such as scheduled location information (such as "ECGI Schedule list") and/or CP Parameter Reliability Indication information (such as "Data Reliability").

In some embodiments, the end user location is identified by studying his daily mobility behavior and predicting his location based on history. This will save a lot of paging messages by multicasting only to eNodeBs which are very relevant to UE location, and it will save unnecessary paging by all eNodeBs belonging to that MME.

Some embodiments for learning the mobility behavior of the end user and for deciding the location of UE will be described hereafter.

A first step may include collecting the daily mobility location updates along with time and day of end user, and segregating end users into different classes. For example, Alpha-Class users are maintaining routine locations in most of the weekdays for more than 70% of data predicted, Beta-Class users are also maintaining their locations routinely between 70 to 50%, and Gama class users are having less than 50% of location reliability. So if end user belongs to alpha class then MME need not do broadcasting paging message, and it can directly send paging to particular eNodeB. For beta class users MME needs to multicast the paging message to some of the eNodeBs where user may be located probably. And Gama Class users are unpredictable then MME has to follow existing broadcast method to locate the end user.

Most of the people will maintain the same locations in week days. For example most people are working in a same location in week days and they go home at nights. Some embodiments include learning their mobility behavior and keeping updating frequently to a centralized server. How often the UE changes its location and what are the regular locations and routes to reach destination (may be office) may be captured by studying user mobility to build a user profile. According to user mobility profile, user would be categorized into classes. This allows to learn user mobility pattern.

In week days or working days most of the end users have to visit same location. And also end users mostly choose the same roads to reach their office/business place. In evening time user would head towards home by using same roads. Some embodiments include calculating end user's location and time approximately. According to location and time updates, a mobility pattern may be prepared by a Data server.

Some embodiments introduce a new interface between MME and Data server.

In some embodiments, the interface from MME to Data server may be used to collect user mobility data to learn and build user profile.

In some embodiments, the interface between HSS and Data server may be used to identify the end user based on subscriber data in HSS.

Data server may be responsible for maintaining one separate account for all end users which are present in HSS. Every mobility event occuring in MME would be updated in data server: If end user enters to an E-nodeB or leaves E-nodeB, handover process, Tracking area change in all location related events would trigger an update message to Data server from MME. Then the Data server may always be active in monitoring end user mobility and may be able to create a pattern. According to that pattern Data server can easily determine the location of end user and respond to HSS request whenever it is required.

MME may also maintain a timer, and send periodic update on timer expiry to Application Server, so that the Application Server may detect some events, such as when UE detaches, or when UE moves out of MME due e.g. to Handover.

An exemple of information sent by MME to Application Server over the new interface between MME and Data Server may contain some or all of following information:
- Global eNB Identity: identifying a eNodeB
- IMSI (International Mobile Subscriber Identity): identifying a user
- GUMMEI (Globally Unique MME Identifier) : identifying a MME
- Start time and End time : defing a time period where the UE has been served by the eNodB.
- PLMN (Public Land Mobile Network): identifying the mobile network
- TAC

The Application Server may collect the data from various MME about the UE's mobility pattern, and build the UE profile and store it locally (using IMSI as identifier).

In an embodiment, the Application server may be co-Located with HSS.

As recalled above, in a non-optimized paging procedure, paging messages from MME to all eNodeBs (of the TAs where the UE is registered) will be broadcasted before any call establishment. Paging response from UE will confirm to MME regarding its location for communication, then normal call establishment process will take place.

Embodiments of the invention avoid such broadcasting of paging messages from MME to all eNodeBs and all eNodeBs searching for UE even though it is not present in their coverage area.

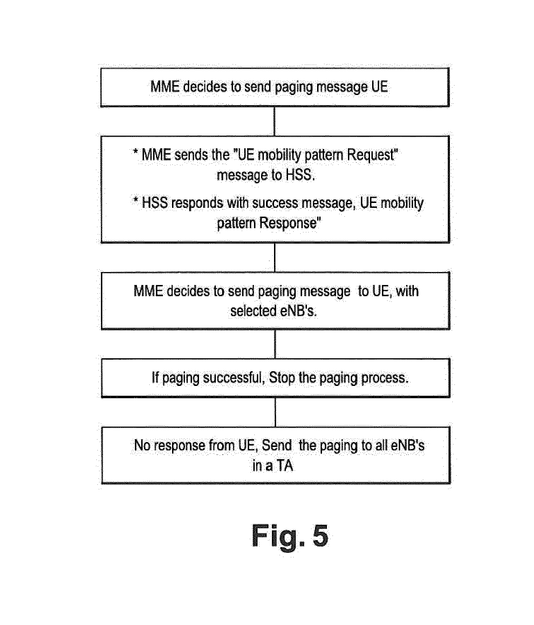

In some embodiments, an optimized paging procedure includes some or all of following steps illustrated in figure 5:
- MME decides to send paging message to UE
- MME sends the "UE mobility pattern request" message to HSS, HSS responds with success message "UE mobility pattern response"
- MME decides to send paging messages to the selected eNBs (eNBs of the list contained in the "UE mobility pattern response"
- If the paging is successful, the paging process is stopped
- If the paging is not successful (no response received from the UE), the MME sends paging messages to all eNBs of a TA, according to the legacy (non-optimized) paging procedure.

Embodiments of the invention enable to reduce the unwanted broadcasting paging from MME to all E-NodeBs. By studying history of UE location and mobility pattern of user we can predict his current location, this data is very near to accurate information and in case UE will not respond to the paging, then MME have to choose legacy method for paging by broadcasting paging to all E-nodeBs.

Various aspects of the invention include (though not being limited to) following aspects.

In one aspect, there is provided a method for resource optimization in a mobile communication network, based on predictable Communication Pattern CP information of a User Equipment UE, a method wherein:
- said CP information includes information referred to as scheduled location information, providing a schedule of expected UE locations.

Various embodiments include (though not being limited to) following embodiments, which may be taken alone or in combination, according to various combinations.

In an embodiment:
- said scheduled location information includes a list of cells where the UE is expected to be located, and times at which the UE is expected to be located at said cells.

In an embodiment, said method comprises:
- a mobility management entity using said scheduled location information for paging optimization.

In an embodiment, said method comprises:
- an Application Server determining said scheduled location information, based on UE location history information.

In an embodiment, said method comprises:
- a mobility management entity sending UE location history information to an Application Server.

In an embodiment, said method comprises:
- an Application Server sending said CP information to a Home Subscriber Server HSS.

In an embodiment, said method comprises:
- a Home Subscriber Server HSS sending said CP information to a mobility management entity.

In another aspect, there is provided a method for resource optimization in a mobile communication network, based on predictable Communication Pattern CP information of User Equipment UE, a method wherein:
- said CP information includes information characterizing the communication of the UE, and information referred to as reliability indication information, providing an indication of the reliability of said information characterizing the communication of the UE.

Various embodiments include (though not being limited to) following embodiments, which may be taken alone or in combination, according to various combinations.

In an embodiment:
- said information characterizing the communication of the UE includes scheduled location information, providing a schedule of expected UE locations.

In an embodiment, said method comprises:
- a mobility management entity using said scheduled location information together with said reliability indication information for paging optimization.

In an embodiment, said method comprises:
- an Application Server sending said CP information to a Home Subscriber Server HSS.

In an embodiment, said method comprises:
- a Home Subscriber Server HSS sending said CP information to a mobility management entity.

Other aspects relate to network entities configured for performing related steps of such method(s), said network entities including (though not limited to): mobility management entity (such as Mobility Management Entity MME or Serving GPRS Support Node SGSN), Home Subscriber Server HSS, Application Server, RAN entity (such as eNodeB, or Radio Network Controller RNC, or Base Station Controller BSC).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for resource optimization in a mobile communication network, based on predictable Communication Pattern CP information of a User Equipment UE, a method wherein:
- said CP information includes information referred to as scheduled location information, providing a schedule of expected UE locations.

2. A method according to claim 1, wherein:
- said scheduled location information includes a list of cells where the UE is expected to be located, and times at which the UE is expected to be located at said cells.

3. A method according to claim 1 or 2, comprising:
- a mobility management entity using said scheduled location information for paging optimization.

4. A method according to any of claims 1 to 3, comprising:
- an Application Server determining said scheduled location information, based on UE location history information.

5. A method according to any of claims 1 to 4, comprising:
- a mobility management entity sending UE location history information to an Application Server.

6. A method for resource optimization in a mobile communication network, based on predictable Communication Pattern CP information of User Equipment UE, a method wherein:
- said CP information includes information characterizing the communication of the UE, and information referred to as reliability indication information, providing an indication of the reliability of said information characterizing the communication of the UE.

7. A method according to claim 6, wherein:
- said information characterizing the communication of the UE includes scheduled location information, providing a schedule of expected UE locations.

8. A method according to claim 7, comprising:
- a mobility management entity using said scheduled location information together with said reliability indication information for paging optimization.

9. A method according to any of claims 1 to 8, comprising:
- an Application Server sending said CP information to a Home Subscriber Server HSS.

10. A method according to any of claims 1 to 9, comprising:
- a Home Subscriber Server HSS sending said CP information to a mobility management entity.

11. A mobility management entity, such as Mobility Management Entity MME or Serving GPRS Support Node SGSN, configured to perform related steps of a method according to any of claims 1 to 10.

12. A Home Subscriber Server HSS, configured to perform related steps of a method according to any of claims 1 to 10.

13. An Application Server, configured to perform related steps of a method according to any of claims 1 to 10.
